# EUROPEAN PATENT SPECIFICATION

(11) **EP 3 850 935 B1**
(45) Date of publication and mention of the grant of the patent: **02.11.2022**
(21) Application number: 20215898.6
(22) Date of filing: 21.12.2020
(51) Int. Cl.: A01D 34/00

(54) **WORKING MACHINE AND WORKING SYSTEM**
ARBEITSMASCHINE UND ARBEITSSYSTEM
MACHINE DE TRAVAIL ET SYSTÈME DE TRAVAIL

(30) Priority: 17.01.2020 JP 2020006119
(43) Date of publication of application: 21.07.2021
(73) Proprietor: HONDA MOTOR CO., LTD., Minato-ku Tokyo 107-8556 (JP)
(72) Inventor: Matsui, Yuki, Saitama, 351-0193 (JP); Nishimura, Jin, Saitama, 351-0193 (JP)
(74) Representative: Beder, Jens

(56) References cited:
- EP-B1- 2 626 762
- WO-A1-03/104909
- WO-A1-2011/115534
- WO-A1-2012/044220
- WO-A1-2019/167203

## Description

### BACKGROUND OF THE INVENTION

### Field of the Invention

The present invention mainly relates to a working machine.

### Description of the Related Art

Some working machines (lawn mowers) detect a working region by itself and perform a work (for example, lawn mowing) in the working region. Japanese Patent Laid-Open No. 2017-182634 describes that a working region is defined by wires, and a working machine travels in the working region while detecting the signals (for example, electromagnetic waves) of the wires. Such a working machine is also called a self-traveling working machine, an unmanned traveling working machine, or the like.

The above-described working region may have a complex outer shape depending on location conditions. As an example, a part of the working region may have a long shape like a passage and form a so-called a narrow path. In this case, it may be difficult to appropriately detect the narrow path because of interference between the signals of wires on both sides of the narrow path, or it may be difficult to decide the traveling route in the narrow path. In general, these can be causes of lowering of a work efficiency.

D1 (WO 03/104909 A1) discloses a system for guiding a drive of a self-traveling machine based on a magnetic field generated by a loop formed by a coil.

The present invention improves the work efficiency of a self-traveling working machine in a working region including a narrow path.

### SUMMARY OF THE INVENTION

The present invention provides a self-traveling working machine as specified in claims 1 to 6.

### BRIEF DESCRIPTION OF THE DRAWINGS

Fig. 1 is a view showing an example of the arrangement of a working machine according to an embodiment;
Fig. 2 is a block diagram showing an example of the arrangement of the working machine;
Figs. 3A and 3B are views showing examples of the intensity distribution of an electromagnetic wave generated by an area wire;
Figs. 4A to 4C are views showing examples of the intensity distribution of an electromagnetic wave generated by an area wire;
Fig. 5 is a flowchart showing an example of traveling control when returning to a station;
Fig. 6 is a view showing an example of a return mode to the station;
Fig. 7 is a view showing an example of a return mode to the station;
Fig. 8 is a view showing an example of the arrangement of a working machine according to another embodiment; and
Fig. 9 is a view showing an example of a driving mode of an area wire.

### DESCRIPTION OF THE EMBODIMENTS

Hereinafter, embodiments will be described in detail with reference to the attached drawings. Note that the following embodiments are not intended to limit the scope of the claimed invention, and limitation is not made to an invention that requires all combinations of features described in the embodiments. Two or more of the multiple features described in the embodiments may be combined as appropriate. Furthermore, the same reference numerals are given to the same or similar configurations, and redundant description thereof is omitted.

### (1. First Embodiment)

### (1-1. Example of Arrangement of Working System)

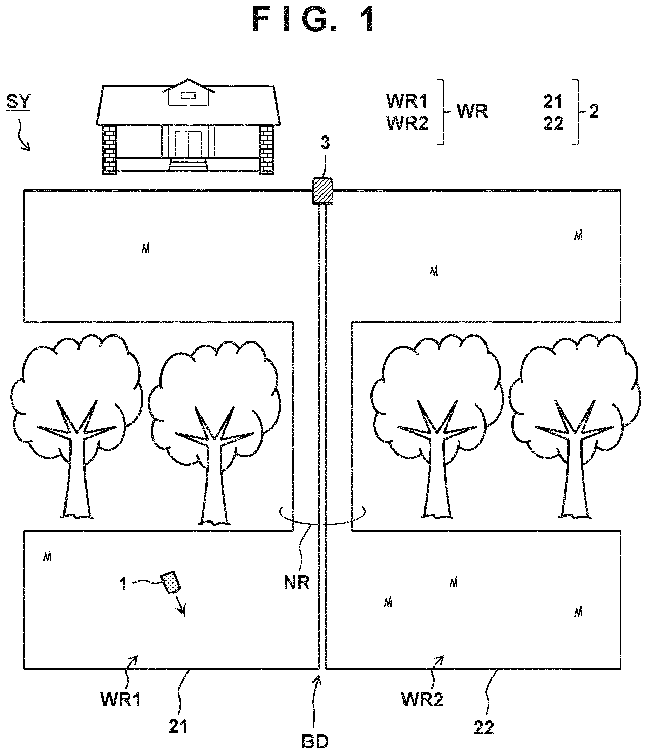

Fig. 1 is a schematic view showing an example of the arrangement of a working system SY according to an embodiment. The working system SY includes a working machine 1, an area wire 2, and a station 3. As will be described later in detail, the working machine 1 is configured to execute a predetermined work, and in this embodiment, the working machine 1 is a lawn mower that performs lawn mowing as work contents.

The area wire 2 can be installed (for example, laid or buried) to define a working region WR. A predetermined power is supplied to the area wire 2, whereby the area wire 2 generates an electromagnetic wave. In this embodiment, the working region WR is divided into a first region WR1 and a second region WR2, which are adjacent to each other, and the area wire 2 includes area wires 21 and 22 corresponding to the regions WR1 and WR2, respectively.

That is, the area wire 21 defines the region WR1 and generates a first electromagnetic wave, and the area wire 22 defines the region WR2 and generates a second electromagnetic wave. Here, the electromagnetic wave can be interpreted in a broad sense, and its concept includes light, a radio wave, and the like. In this viewpoint, it can be said that the electromagnetic wave generated by the area wire 21 is a signal representing the region WR1, and the electromagnetic wave generated by the area wire 22 is a signal representing the region WR2.

Pulse currents having a predetermined period are intermittently supplied to the area wires 21 and 22 at timings different from each other, and electromagnetic waves thus generated from the area wires 21 and 22 can be distinguished from each other, as will be described later in detail. The working machine 1 can perform a work while maintaining traveling in the working region WR based on the electromagnetic waves from the area wires 21 and 22.

Note that the area wire 2 (or the area wires 21 and 22) may simply be expressed as a wire.

The station 3 is generally installed at an edge portion of the working region WR, and is configured to cause the working machine 1 in a non-working state to wait and charge a battery (a battery 16 to be described later) provided in the working machine 1. The station 3 may be expressed as a charging station or the like. The above-described area wire 2 is electrically connected to the station 3, and generates an electromagnetic wave upon receiving power supply from the station 3.

In this embodiment, the station 3 is installed on a boundary portion BD between the regions WR1 and WR2. The station 3 can supply power to each of the area wires 21 and 22, and energizes the area wire 2 such that the electromagnetic wave of the area wire 21 and the electromagnetic wave of the area wire 22 are alternately generated. This makes it possible to distinguish the electromagnetic waves from the area wires 21 and 22 from each other.

As will be described later in detail, the working region WR includes a narrow path NR extending in a predetermined direction, and the boundary portion BD between the regions WR1 and WR2 divides the narrow path NR to extend in the extending direction of the narrow path NR. Note that in the boundary portion BD between the regions WR1 and WR2, the area wires 21 and 22 are installed close to each other.

Note that the narrow path NR here indicates a region where the width of the working region WR is narrower than a reference or a region where the width of a part of the working region WR is narrower than the widths of other portions. Hence, the narrow path NR need not always have a passage shape, and its length in the extending direction does not matter.

### (1-2. Example of Arrangement of Working Machine)

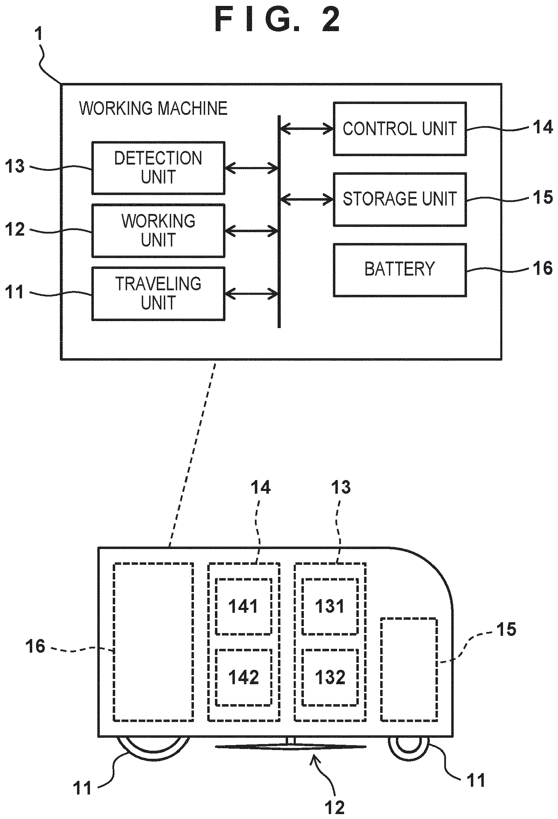

Fig. 2 is a block diagram showing an example of the arrangement of the working machine 1. The working machine 1 includes a traveling unit 11, a working unit 12, a detection unit 13, a control unit 14, a storage unit 15, and the battery 16.

The traveling unit 11 is provided in the lower portion of the vehicle body of the working machine 1, and is configured to execute advance, retreat, and turn (left turn/right turn) of the working machine 1. In this embodiment, as the traveling unit 11, a total of four wheels including two front wheels that are driven wheels and two rear wheels that are driving wheels are used, thereby implementing four-wheel driving. However, the number of wheels is not limited to this. As another embodiment, a crawler type traveling body may be used in place of the traveling unit 11 capable of implementing four-wheel traveling.

The working unit 12 is provided in the lower portion of the vehicle body of the working machine 1 and configured to execute a predetermined work (here, lawn mowing). A known working mechanism is used in the working unit 12. In this embodiment, a disc-shaped lawn mowing blade, a rotation mechanism capable of rotating the blade, and a lifting mechanism capable of moving the blade up and down are used. According to this arrangement, the blade is moved down and set in a rotation state (operative state) at the time of a work, and is moved up and set in a non-rotation state (inoperative state) at the time of a non-work. The working machine 1 travels in the working region WR while maintaining the working unit 12 in the operative state, thereby executing lawn mowing in the region that it has passed.

The detection unit 13 is configured to acquire information that enables to appropriately maintain traveling of the working machine 1, and in this embodiment, includes a signal detection unit 131 and a vibration detection unit 132.

The signal detection unit 131 can detect the electromagnetic waves generated by the area wires 21 and 22 as signals representing the regions WR1 and WR2. As will be described later in detail, for example, the electromagnetic wave generated by the area wire 21 (or 22) exhibits a positive value in the region WR1 (or WR2), and exhibits a negative value outside the region WR1 (or WR2). In addition, the absolute value of the intensity of the electromagnetic wave is generally large near the edge of the region WR1 (or WR2).

In this embodiment, a pair of left and right signal detection units 131 are provided in the main body of the working machine 1, thereby acquiring the relative position of the working machine 1 in the region WR1 (or WR2). For example, if both detection results are positive values, it can be said that the main body of the working machine 1 is located in the region WR1 (or WR2), and the side where the signal value is large is the outer side, and the side where the signal value is small is the inner side. Alternatively, for example, if one detection result is a positive value, and the other detection result is a negative value, it can be said that the main body of the working machine 1 is located almost immediately above the area wire 21 (or 22).

Based on the detection results of the signal detection units 131, the working machine 1 performs a work while maintaining traveling in the working region WR.

The vibration detection unit 132 can detect a vibration or an impact applied to the vehicle body of the working machine 1. For example, the vibration detection unit 132 detects contact with an obstacle (for example, a stone) impeding traveling, and accordingly, the working machine 1 that is traveling makes a turn and avoids the obstacle. As the vibration detection unit 132, a known vibration detection sensor such as an acceleration sensor is used.

The control unit 14 is a system controller configured to control the entire working machine 1, and in this embodiment, includes a traveling control unit 141 and a work control unit 142.

The traveling control unit 141 performs driving control of the traveling unit 11 based on the detection result of the detection unit 13. For example, if an outer edge of the working region WR (or the region WR1 or WR2) is detected by the signal detection unit 131, the traveling control unit 141 causes the working machine 1 to turn before the outer edge and maintains traveling of the working machine 1 in the working region WR (or the region WR1 or WR2).

The work control unit 142 performs driving control of the working unit 12. For example, the work control unit 142 performs driving control of the power source such as an electric motor in accordance with the load of the lawn mowing blade, thereby driving the blade at a desired rotation speed. Additionally, for example, if an overload is applied to the lawn mowing blade, the work control unit 142 can set the working unit 12 in the inoperative state and outputs a notification signal used to notify the user (for example, the owner or user of the working machine 1) of it.

In this embodiment, the control unit 14 is formed by one or more processors each including a CPU and a memory, and its function is implemented by executing a predetermined program. As another embodiment, the control unit 14 may be formed by a semiconductor device such as a PLD (Programmable Logic Device) or an ASIC (Application Specific Integrated Circuit). That is, the function of the control unit 14 can be implemented by any of hardware and software.

The storage unit 15 stores, for example, traveling control parameters to be used when passing the narrow path NR, as will be described later in detail. As the storage unit 15, a nonvolatile memory such as an EEPROM (Electrically Erasable Programmable Read-Only Memory) is used.

The battery 16 can supply a corresponding power to each of the traveling unit 11, the working unit 12, the detection unit 13, the control unit 14, and the storage unit 15 via a known voltage converter. As described above, the battery 16 is configured to be chargeable during the wait of the working machine 1 in the station 3. As the battery 16, for example, a secondary battery such as a lithium ion battery can be employed.

### (1-3. Summary of Working Mode)

With the above-described arrangement, the working machine 1 can appropriately perform a predetermined work (here, lawn mowing) while traveling in the working region WR. For example, when a work start time comes, the working machine 1 moves from the station 3 to the working region WR, adjusts the posture by turning, and then performs a work while traveling straight (advancing). After that, if the outer edge of the working region WR is detected, the working machine 1 turns before the outer edge to avoid intersection with the outer edge, and/or if an obstacle is detected, the working machine 1 turns before the obstacle to avoid the obstacle. After that, the working machine 1 performs the work while traveling straight again. By repeating this operation, the working machine 1 executes the work while appropriately maintaining the traveling in the working region WR, and the work is continued until a work end time.

A mode in which a work in the working region WR is performed has been exemplified here. The work may be performed sequentially for each of the regions WR1 and WR2. That is, the working machine 1 can first perform a work for one region WR1 (or WR2) after the start of the work, and then perform the work for the other region WR2 (or WR1).

When the work end time comes, the working machine 1 returns to the station 3, as will be described later in detail. The battery 16 is charged until the next work start time. The working machine 1 can be expressed as a self-traveling working machine, an unmanned traveling working machine, or the like.

### (1-4. Return Mode to Station)

As described above, the area wire 2 is electrically connected to the station 3. For this reason, when returning to the station 3, the working machine 1 can reach the station 3 by traveling while detecting the electromagnetic wave from the area wire 2 (in this embodiment, the area wires 21 and 22) by the signal detection unit 131. For example, after the electromagnetic wave generated by the area wire 21 is detected, the working machine 1 traveling in one region WR1 travels along the peripheral edge portion of the region WR1, thereby reaching the station 3.

Before a description of the return to the station 3, the electromagnetic wave generated by the area wire 21 will be described. A case of the area wire 21 will be described below, and this also applies to the area wire 22.

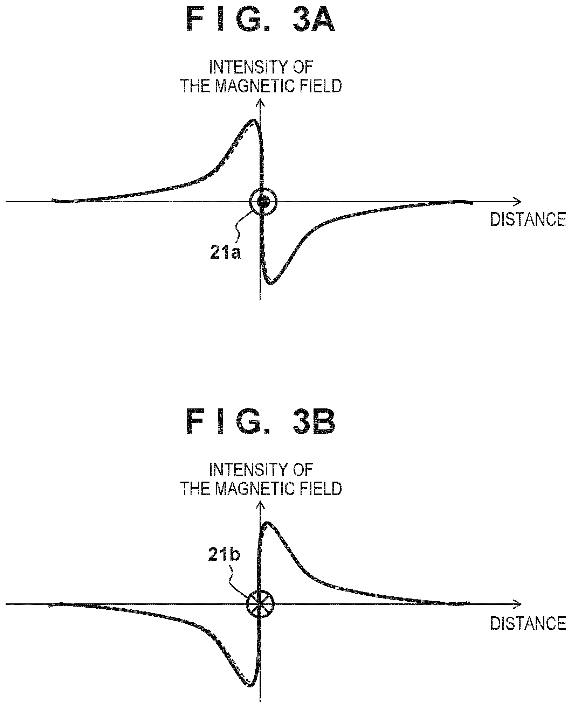

Figs. 3A and 3B are views for explaining the intensity of the electromagnetic wave generated by the area wire 21. A pulse current having a predetermined period (a plurality of DC currents in a relatively short period) is intermittently supplied from the area station 3 to the area wire 21, and a predetermined electromagnetic wave is generated from the area wire 21 during that time.

In Fig. 3A, the pulse current flows to the area wire 21 from the far side of the sheet surface to the near side of the sheet surface (to be referred to as an "area wire 21a" for the sake of distinction. Note that in a case of the area wire 22, it is distinguished as an "area wire 22a"). Consequently, as the electromagnetic wave, a magnetic field facing down (to be referred to as a magnetic field of positive pole) is generated on the left side of the area wire 21a, and a magnetic field facing up (to be referred to as a magnetic field of negative pole) is generated on the right side of the area wire 21a.

In Fig. 3B, the pulse current flows to the area wire 21 from the near side of the sheet surface to the far side of the sheet surface (to be referred to as an "area wire 21b" for the sake of distinction. Note that in a case of the area wire 22, it is distinguished as an "area wire 22b"). Consequently, as the electromagnetic wave, a magnetic field facing up (a magnetic field of negative pole) is generated on the left side of the area wire 21b, and a magnetic field facing down (a magnetic field of positive pole) is generated on the right side of the area wire 21b.

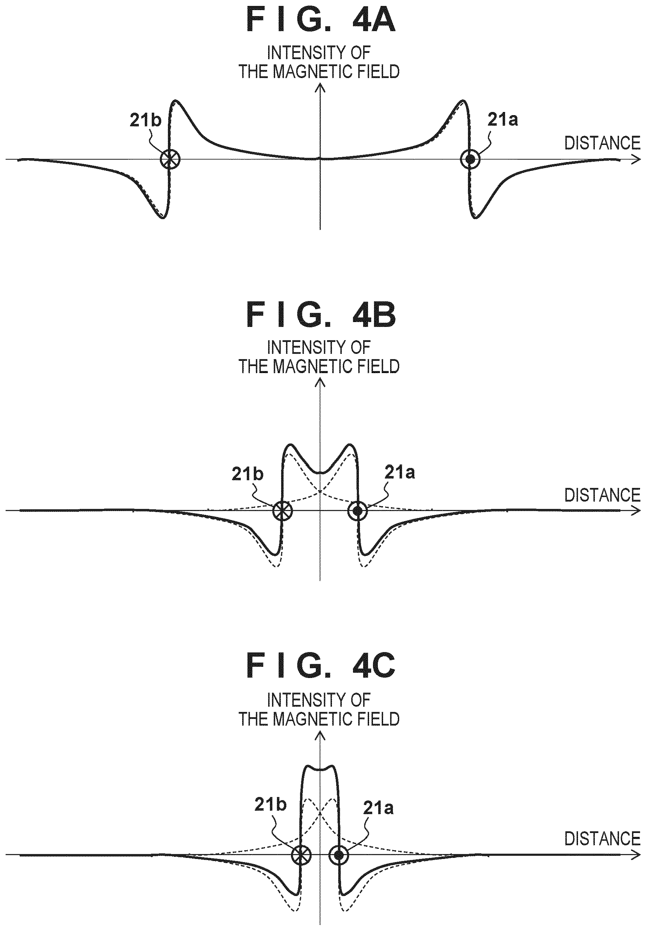

Fig. 4A shows the intensity distribution of a magnetic field in a case in which the region WR1 is sufficiently wide (that is, in a case in which the area wires 21a and 21b are sufficiently apart from each other). As is apparent from Fig. 4A, in the region WR1, the magnetic field of positive pole can be detected by the signal detection unit 131. Outside the region WR1, the magnetic field of negative pole can be detected.

Additionally, as can be seen from Fig. 4A, the shorter the distance from the area wire 21a or 21b is, the higher the intensity of the magnetic field is. The longer the distance from area wire 21a or 21b is, the lower the intensity of the magnetic field is. In other words, in the case of Fig. 4A, it can be said that both inside and outside the region WR1, the intensity of the magnetic field substantially has a linearity as the dependence on the distance from the area wires 21a and 21b. Note that the linearity can typically appear within the distance range of several ten meters from the area wire 21a (or 21b).

Fig. 4B shows the intensity distribution of a magnetic field in a case in which the region WR1 is made narrower than in the case of Fig. 4A (that is, in a case in which the area wires 21a and 21b are made closer). In the case of Fig. 4B, the intensity of the magnetic field is high in the region WR because of the interference between the magnetic field in the area wire 21a and the magnetic field in the area wire 21b, as can be seen. As a result, in the case of Fig. 4B, the above-described linearity (see Fig. 4A) may be lost in the region WR1.

Fig. 4C shows the intensity distribution of a magnetic field in a case in which the region WR1 is further made narrower than in the case of Fig. 4B (that is, in a case in which the area wires 21a and 21b are further made closer). In the case of Fig. 4C, the intensity of the magnetic field is higher in the region WR1, and the above-described linearity (see Fig. 4A) may further be lost in the region WR1.

As described above, when returning to the station 3, the working machine 1 traveling in one region WR1 travels along the peripheral edge portion of the region WR1. Here, when returning to the station 3, if the working machine 1 travels the same path as a return path in the past, a mark (so-called track) of the passage of the working machine 1 may be noticeable.

In this embodiment, the working machine 1 can adjust the return path to the station 3 based on the above-described linearity (see Fig. 4A) and can thus travel a path different from the return path in the past. That is, the working machine 1 can appropriately implement detection by the signal detection unit 131 by referring to the above-described linearity. Since the intensity of the magnetic field depends on the distance from the area wire 21, the working machine 1 can travel while maintaining the intensity of the magnetic field detected by the signal detection unit 131 at a desired value (a parameter that can arbitrarily be changed).

For example, assume that the working machine 1 returned to the station 3 in the past by traveling a path where the intensity of the magnetic field was Ka (Ka > o) using the signal detection unit 131. In this case, when returning to the station 3 again in another opportunity, the working machine 1 travels a path on which the intensity of the magnetic field is Kb (Kb > o, Kb ≠ Ka), thereby returning to the station 3 along a path different from the return path in the past. According to this return mode, it is possible to make the mark of the passage of the working machine 1 hard to remain.

In this embodiment, however, the working region WR includes the narrow path NR (see Fig. 1). If the working region WR is defined only by a single area wire, the above-described linearity may be lost in the narrow path NR (see Figs. 4B and 4C). Hence, in the narrow path NR, the adjustment of the return path to the station 3 may be difficult, and the passage through the narrow path NR itself may be difficult.

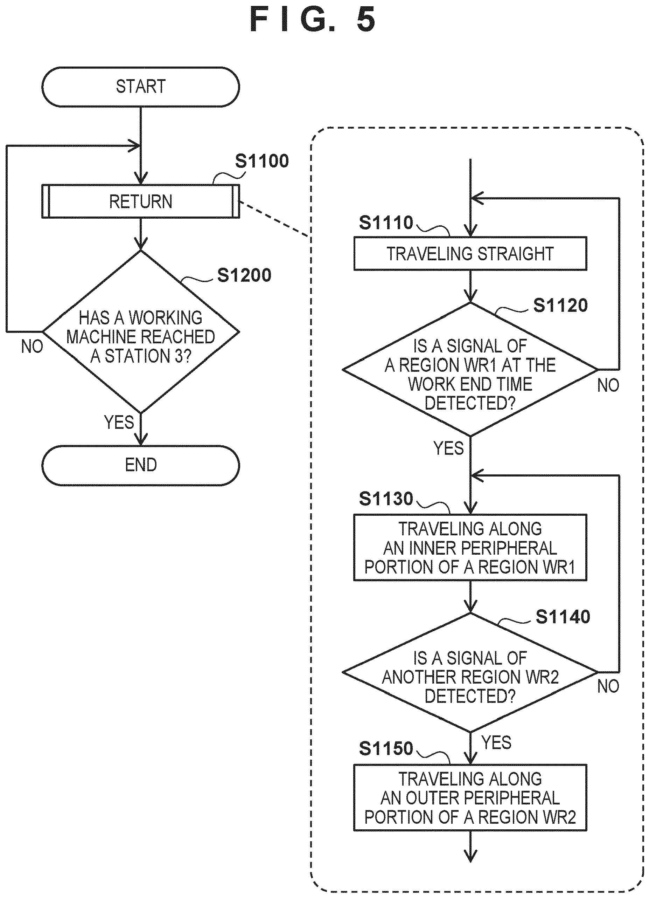

Fig. 5 is a flowchart showing the contents of traveling control when the working machine 1 returns to the station 3. This flowchart is mainly executed by the traveling control unit 141 and is started when, for example, the work end time has come, or the remaining amount of the battery 16 has become equal to or less than a reference. As the outline, during traveling of the working machine 1 in one region WR1, if the electromagnetic wave of the area wire 22, which is a signal representing the other region WR2, is detected, the working machine 1 returns based on the electromagnetic wave.

In step S1100 (to be simply referred to as S1100 hereinafter, and the same applies to the other steps to be described later), return control processes S1110 to S1150 to be described later are performed. In S1200, it is determined whether the working machine 1 has reached the station 3. If the working machine 1 has reached the station 3, the flowchart is ended. Otherwise, the process returns to S1100.

In S1110, the working machine 1 travels straight (advances). In S1120, it is determined whether the signal, here, the electromagnetic wave of the region WR1 (the region WR2 in the case of the region WR2) that is the working region at the work end time is detected. If the electromagnetic wave is detected, the process advances to S1130. Otherwise, the process returns to S1110. That is, in S1110 and S1120, the working machine 1 travels straight until reaching the vicinity of the outer edge of the region WR1.

Note that signal detection here means that the result of detection by the signal detection unit 131 satisfies a reference (a detection value reaches a reference value) and, for example, that the absolute value of the intensity of the electromagnetic wave detected by the signal detection unit 131 is equal to or more than a threshold. This also applies to S1140 to be described later.

In S1130, the working machine 1 travels along the inner peripheral portion of the region WR1 (WR2). As described above, in this embodiment, the return path to the station 3 is adjusted. Hence, in S1130, the working machine 1 decides, based on, for example, a return history stored in the storage unit 15, which path along the inner peripheral portion of the region WR1 (WR2) should be used to travel, and travels along the path, as will be described later in detail.

In S1140, it is determined whether the signal, here, the electromagnetic wave of the other region WR2 (the region WR1 in the case of the region WR1) is detected. If the electromagnetic wave is detected, the process advances to S1150. Otherwise, the process returns to S1130.

In S1150, the working machine 1 travels along the outer peripheral portion of the region WR2 (WR1). As described above, in this embodiment, the return path to the station 3 is adjusted. Hence, in S1150, the working machine 1 decides, based on, for example, a return history stored in the storage unit 15, which path along the outer peripheral portion of the region WR2 (WR1) should be used to travel, and travels along the path, as will be described later in detail.

Note that at the point of time when the working machine 1 has reached the station 3, S1110 to S1150 are ended (see S1200).

According to this return mode, during traveling in one of the regions WR1 and WR2, which divide the working region WR, the working machine 1 travels along the boundary portion BD when reaching the boundary portion BD and returns to the station 3. Hence, the working machine 1 can relatively quickly return to the station 3. In this viewpoint, it can be said that the control unit 14 further includes a determination unit configured to determine, upon detecting the signal of the other region WR2 (or WR1) during traveling of the working machine 1 in one region WR1 (or WR2), that the working machine 1 is located near the boundary portion BD, or functions as the determination unit.

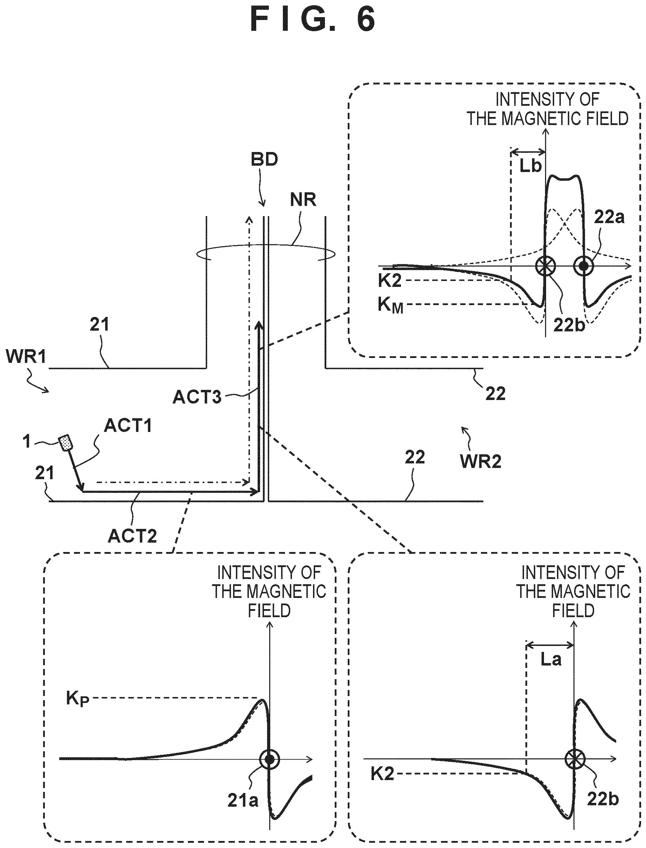

Fig. 6 shows a return mode to the station 3 according to the flowchart of Fig. 5. As indicated by ACT1, the work end time comes during traveling in the region WR1, and the working machine 1 reaches the outer edge of the region WR1 by traveling straight (corresponding to S1110 to S1120 in Fig. 5).

After reaching the outer edge of the region WR1, the working machine 1 travels along the outer edge, as indicated by ACT2. At this time, the working machine 1 travels such that a signal value (the intensity of the magnetic field from the area wire 21) K detected by the signal detection unit 131 maintains a desired value K1 (a value (variable value) satisfying o < K1 ≤ K_{P}). In this way, the working machine 1 travels a path along the inner peripheral portion of the region WR1 (corresponding to S1130 in Fig. 5), thereby implementing the above-described return path adjustment. The inner peripheral portion here includes the outer edge of the region WR1 and a region near the inner side, and can also be said as an inner peripheral edge portion.

After that, when reaching the boundary portion BD between the regions WR1 and WR2, the working machine 1 travels along the boundary portion BD, as indicated by ACT3. At this time, the working machine 1 travels such that the signal value (the intensity of the magnetic field from the area wire 22) K detected by the signal detection unit 131 maintains a desired value K2 (a value (variable value) satisfying K_{M} ≤ K2 < o). This applies to both before and after the start of traveling of the working machine 1 in the narrow path NR. In this way, after reaching the boundary portion BD, the working machine 1 travels a path along the outer peripheral portion of the region WR2 (corresponding to S1140 and S1150 in Fig. 5), thereby implementing the above-described return path adjustment. The outer peripheral portion here includes the outer edge of the region WR2 and a region near the outer side, and can also be said as an outer peripheral edge portion.

In this embodiment, the desired values K1 (o < K1 ≤ K_{P}) and K2 (K_{M} ≤ K2 < o) have been exemplified. The relationship of these may be |K2| = K1 or |K2| ≠ K1.

In the example shown in Figs. 5 and 6, during traveling in the narrow path NR, as a result, the working machine 1 passes near the boundary portion BD of the outer peripheral portion of the region WR2 as compared to traveling outside the narrow path NR. That is, as shown in the enlarged view in Fig. 6, outside the narrow path NR, the intensity of the magnetic field from the area wire 22b outside the region WR2 exhibits the same linearity as in Fig. 4A. Outside the narrow path NR, when traveling such that the signal value K maintains the desired value K2, the working machine 1 travels at a position apart from the area wire 22b by a distance La. On the other hand, in the narrow path NR, the intensity of the magnetic field from the area wire 22b outside the region WR2 exhibits the same linearity as in Fig. 4C. In the narrow path NR, when traveling such that the signal value K maintains the desired value K2, the working machine 1 travels at a position apart from the area wire 22b by a distance Lb (Lb < La).

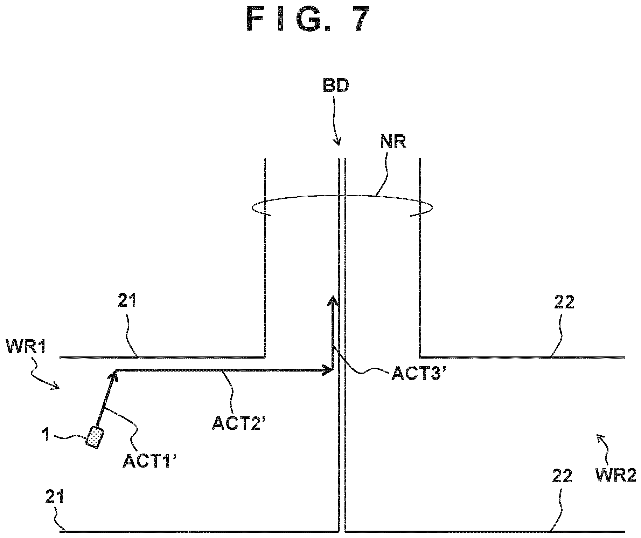

Fig. 7 shows another example of the return mode to the station 3, and shows an example in which the working machine 1 traveling in the region WR1 reaches the narrow path NR before reaching the boundary portion BD.

As indicated by ACT1', the work end time comes during traveling in the region WR1, and the working machine 1 reaches the outer edge of the region WR1 by traveling straight (like ACT1 in Fig. 6). After reaching the outer edge of the region WR1, the working machine 1 travels along the inner peripheral portion, as indicated by ACT2' (like ATC2 in Fig. 6).

Here, the area wires 21 and 22 are arranged close in the narrow path NR, as described above. For this reason, when reaching the narrow path NR, the working machine 1 traveling in the region WR1 can detect the signal of the region WR2 by the signal detection unit 131. Hence, when reaching the boundary portion BD, the working machine 1 can travel along the boundary portion BD, here, along the outer peripheral portion of the region WR2, as indicated by ACT3' (like ATC3 in Fig. 6).

### (1-5. Summary)

As described above, according to this embodiment, the working machine 1 returns to the station 3 while detecting, by the signal detection unit 131, the electromagnetic waves generated by the area wires 21 and 22 as signals representing the regions WR1 and WR2, respectively. For example, the working machine 1 traveling in one region WR1 (or WR2) detects, by the signal detection unit 131, the electromagnetic wave generated by the area wire 21 (or 22) as a signal representing the region WR1 (or WR2), thereby traveling along the inner peripheral portion of the region WR1 (or WR2). The working machine 1 can thus return to the station 3. At this time, the traveling control unit 141 causes the working machine 1 to travel such that the value of the detected signal maintains a desired value. Here, when the desired value is defined as a parameter (first value) that can arbitrary be changed, only a specific portion along the inner peripheral portion of the region WR1 (or WR2) never becomes the traveling path, and the mark of the passage of the working machine 1 can be reduced.

In this mode, if the electromagnetic wave generated by the area wire 22 (or 21) is detected by the signal detection unit 131 as a signal representing the other region WR2 (or WR1), the traveling control unit 141 causes the working machine 1 to travel such that the value of the detected signal maintains a desired value. Since the working machine 1 travels along the boundary portion BD between the regions WR1 and WR2 that divide the working region WR and returns to the station 3, the working machine 1 can relatively quickly return to the station 3. Even in this case, if the desired value is a parameter (second value) that can arbitrarily be changed, only a specific portion along the boundary portion BD never becomes the traveling path. Hence, the mark of the passage of the working machine 1 can be reduced.

In the narrow path NR, the linearity of the intensity of the electromagnetic wave of the area wire 22 (or 21), which is the value of a signal representing the region WR2 (or WR1), may be lost along the inner peripheral portion of the region WR2 (or WR1), as described with reference to Figs. 4B and 4C, and the like. On the other hand, along the outer peripheral portion of the region WR2 (or WR1), the intensity of the electromagnetic wave of the area wire 22 (or 21) can almost have a linearity. According to this embodiment, since the working machine 1 travels along the outer peripheral portion of the region WR2 (or WR1) based on the electromagnetic wave of the area wire 22 (or 21), the mark of the passage of the working machine 1 can be reduced by making the distance up to the boundary portion BD between the regions WR1 and WR2 variable.

As described above, the electromagnetic wave of the area wire 21 and the electromagnetic wave of the area wire 22 are alternately generated. For this reason, the traveling control unit 141 can return to the station 3 while additionally detecting, by the signal detection unit 131, the electromagnetic wave generated by the area wire 21 (or 22) as a signal representing the region WR1 (or WR2).

In this embodiment, a mode in which the working machine 1 passes through the narrow path NR to return to the station 3 has been exemplified. This also applies to a case other than the return, for example, a case in which the working machine 1 passes through the narrow path NR during a work (or without a work). Hence, according to this embodiment, in the working region WR including the narrow path NR, the working machine 1 can relatively easily pass through the narrow path NR, and as a result, this can be advantageous in improving the work efficiency.

### (2. Second Embodiment)

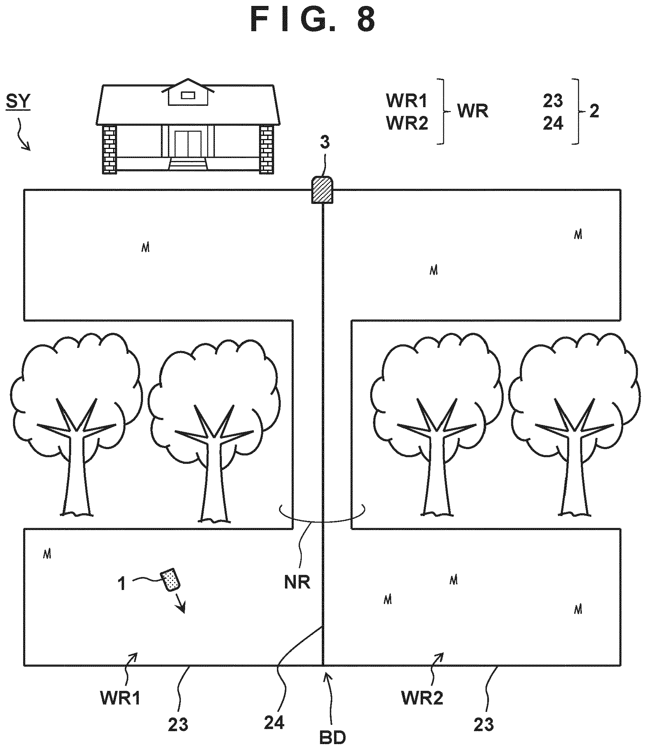

An example of the arrangement of a working system SY according to the second embodiment will be described with reference to Fig. 8. In this embodiment, an area wire 2 includes area wires 23 and 24 in place of the area wires 21 and 22. The area wire 23 is arranged in a ring shape to envelop regions WR1 and WR2. The area wire 24 is arranged along a boundary portion BD between the regions WR1 and WR2. The area wires 23 and 24 are electrically connected to a station 3, and the station 3 can individually generate a signal (first electromagnetic wave) representing the region WR1 and a signal (second electromagnetic wave) representing the region WR2.

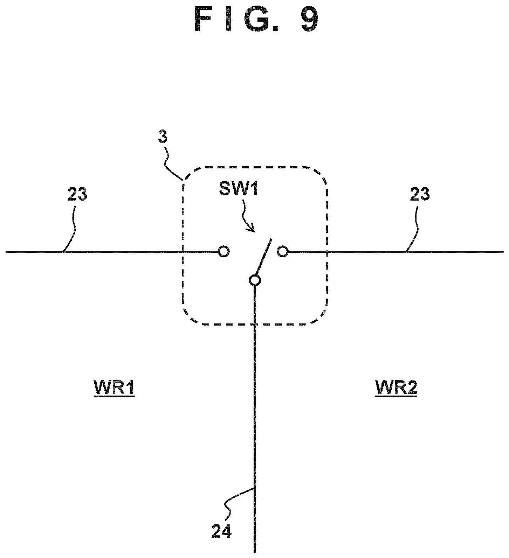

Fig. 9 shows the internal arrangement of the station 3 configured to supply power to the area wires 23 and 24. The station 3 includes a switch SWi. The switch SW1 is configured to connect the area wire 24 to one of one end portion of the area wire 23 on the side of the region WR1 and the other end portion on the side of the region WR2.

For example, if the area wire 24 is connected, by the switch SWi, to the one end portion of the area wire 23 on the side of the region WR1, an electromagnetic wave (corresponding to the electromagnetic wave of the area wire 21) can be generated as a signal representing the region WR1. Additionally, for example, if the area wire 24 is connected, by the switch SWi, to the other end portion of the area wire 23 on the side of the region WR2, an electromagnetic wave (corresponding to the electromagnetic wave of the area wire 22) can be generated as a signal representing the region WR2.

Hence, it can be said that even in this embodiment, the same things as in the above-described first embodiment can be implemented. Additionally, according to this embodiment, it is possible to decrease the number of area wires installed on the boundary portion BD, and it is also possible to relatively simply implement the installation.

### (3. Others)

In the above description, to facilitate the understanding, each element is indicated by a name associated with its function. Each element is not limited to an element having the contents described in the embodiment as the main function, and may auxiliarily have the function.

Additionally, in the embodiment, a lawn mower has been exemplified as the working machine 1. However, the working machine 1 is not limited to a lawn mower. That is, the contents of the embodiment can also be applied to a snowplow including an auger as the working unit 12, and can also be applied to an agricultural working machine such as a cultivator.

The invention is not limited to the foregoing embodiments, and various variations/changes are possible within the scope of the claims.

## Claims

1. A working system (SY), comprising a working region (WR), a self-traveling working machine (1) that performs a work in the working region (WR), a station (3) configured to charge the working machine (1), wherein
the working region (WR)
includes a narrow path (NR), extending in a predetermined direction, whose width is narrower than a predetermined reference, and
is divided into a first region (WR1) and a second region (WR2), which are adjacent to each other, a boundary portion (BD) between the first region (WR1) and the second region (WR2) extending in the predetermined direction such that the first region (WR1) and the second region (WR2) divides the narrow path (NR) extended in the predetermined direction,
the station (3) is installed at any position of the boundary portion (BD),
the working machine (1) comprises:
a signal detection unit (131) configured to detect signals representing the first region (WR1) and the second region (WR2); and
a traveling control unit (141) configured to cause the working machine (1) to travel such that a value of the signal detected by the signal detection unit (131) becomes a desired value, wherein
during traveling of the working machine (1) in one region of the first region (WR1) and the second region (WR2), if a detection result by the signal detection unit (131) for a signal representing the other region satisfies a reference, the traveling control unit (141) causes the working machine (1) to travel based on the signal representing the other region, **characterized in that**,
during traveling of the working machine (1) in the one region, the traveling control unit (131) causes the working machine (1) to travel along an inner peripheral portion of the one region while detecting a signal representing the one region by the signal detection unit (131) such that a value of the signal representing the one region maintains a first value (Ki), and,
if the detection result by the signal detection unit (131) for the signal representing the other region satisfies the reference, the raveling control unit (141) causes the working machine (1) to travel along an outer peripheral portion of the other region such that a value of the signal representing the other region maintains a second value (K2).

2. The system according to claim 1, **characterized in that**,
the working machine (1) further comprises:
a determination unit (14) configured to determine that the working machine (1) is located near the boundary portion (BD) during traveling of the working machine (1) in the one region of the first region (WR1) and the second region (WR2) if the detection result by the signal detection unit (131) for the signal representing the other region satisfies the reference.

3. The system according to claim 1 or 2, **characterized in that** the first region (WR1) and the second region (WR2) are defined by wires (21, 22) configured to generate a first electromagnetic wave and a second electromagnetic wave, respectively, and
a signal detection unit (131) detects the first electromagnetic wave and the second electromagnetic wave as signals representing the first region (WR1) and the second region (WR2).

4. The system according to claim 3, **characterized in that**
the wires (21, 22) include:
a first wire (21) configured to define the first region (WR1) and generate the first electromagnetic wave; and
a second wire (22) configured to define the second region (WR2) and generate the second electromagnetic wave, and
the first wire (21) and the second wire (22) are installed close to each other along the boundary portion (BD) between the first region (WR1) and the second region (WR2).

5. The system according to claim 3, **characterized in that**
the wires (21, 22) include:
a third wire (23) arranged in a ring shape to envelop the first region (WR1) and the second region (WR2); and
a fourth area wire (24) arranged along the boundary portion (BD) between the first region (WR1) and the second region (WR2).

6. The system according to any one of claims 3 to 5, **characterized in that**
a station (3) energizes the wires (21, 22, 23, 24) such that the first electromagnetic wave and the second electromagnetic wave are alternately generated.

## Patentansprüche

1. Arbeitssystem (SY) umfassend einen Arbeitsbereich (WR), eine selbstfahrende Arbeitsmaschine (1), die eine Arbeit in dem Arbeitsbereich (WR) ausführt, eine Station (3), die zum Laden der Arbeitsmaschine (1) ausgebildet ist, wobei
die Arbeitsregion (WR)
einen schmalen Pfad (NR) aufweist, der sich in einer vorbestimmten Richtung erstreckt und dessen Breite schmaler ist als eine vorbestimmte Referenz, und
in einen ersten Bereich (WR1) und einen zweiten Bereich (WR2) unterteilt ist, die einander benachbart sind, wobei sich ein Grenzabschnitt (BD) zwischen dem ersten Bereich (WR1) und dem zweiten Bereich (WR2) in der vorgegebenen Richtung erstreckt, so dass der erste Bereich (WR1) und der zweite Bereich (WR2) den schmalen Pfad (NR), der sich in der vorgegebenen Richtung erstreckt, teilen,
die Station (3) an einer beliebigen Stelle des Begrenzungsabschnitts (BD) installiert wird,
die Arbeitsmaschine (1) umfasst:
eine Signalerfassungseinheit (131), die so konfiguriert ist, dass sie Signale erfasst, die den ersten Bereich (WR1) und den zweiten Bereich (WR2) darstellen; und
eine Fahrsteuereinheit (141), die so konfiguriert ist, dass sie die Arbeitsmaschine (1) veranlasst, sich so zu bewegen, dass ein Wert des von der Signalerfassungseinheit (131) erfassten Signals einen gewünschten Wert annimmt,
wobei
während des Fahrens der Arbeitsmaschine (1) in einem Bereich des ersten Bereichs (WR1) und des zweiten Bereichs (WR2), wenn ein Erfassungsergebnis durch die Signalerfassungseinheit (131) für ein Signal, das den anderen Bereich repräsentiert, eine Referenz erfüllt, die Fahrsteuereinheit (141) die Arbeitsmaschine (1) veranlasst, auf der Grundlage des Signals zu fahren, das den anderen Bereich repräsentiert,
**dadurch gekennzeichnet, dass**,
während des Fahrens der Arbeitsmaschine (1) in dem einen Bereich die Fahrsteuereinheit (131) die Arbeitsmaschine (1) veranlasst, sich entlang eines inneren Umfangsabschnitts des einen Bereichs zu bewegen, während sie ein den einen Bereich repräsentierendes Signal durch die Signalerfassungseinheit (131) erfasst, so dass ein Wert des den einen Bereich repräsentierenden Signals einen ersten Wert (K1) beibehält, und,
wenn das Erfassungsergebnis durch die Signalerfassungseinheit (131) für das Signal, das den anderen Bereich darstellt, die Referenz erfüllt, die Frässteuereinheit (141) die Arbeitsmaschine (1) veranlasst, sich entlang eines äußeren Umfangsabschnitts des anderen Bereichs zu bewegen, so dass ein Wert des Signals, das den anderen Bereich darstellt, einen zweiten Wert (K2) beibehält.

2. System nach Anspruch 1, **dadurch gekennzeichnet, dass**,
die Arbeitsmaschine (1) außerdem umfasst:
eine Bestimmungseinheit (14), die so konfiguriert ist, dass sie bestimmt, dass sich die Arbeitsmaschine (1) während der Bewegung der Arbeitsmaschine (1) in dem einen Bereich des ersten Bereichs (WR1) und des zweiten Bereichs (WR2) in der Nähe des Grenzabschnitts (BD) befindet, wenn das Erfassungsergebnis durch die Signalerfassungseinheit (131) für das Signal, das den anderen Bereich darstellt, die Referenz erfüllt.

3. System nach Anspruch 1 oder 2, **dadurch gekennzeichnet, dass** der erste Bereich (WR1) und der zweite Bereich (WR2) durch Drähte (21, 22) definiert sind, die so konfiguriert sind, dass sie eine erste elektromagnetische Welle bzw. eine zweite elektromagnetische Welle erzeugen, und
eine Signalerfassungseinheit (131) die erste elektromagnetische Welle und die zweite elektromagnetische Welle als Signale erfasst, die den ersten Bereich (WR1) und den zweiten Bereich (WR2) darstellen.

4. System nach Anspruch 3, **dadurch gekennzeichnet, dass**
die Drähte (21, 22) aufweisen:
einen ersten Draht (21), der so konfiguriert ist, dass er den ersten Bereich (WR1) definiert und die erste elektromagnetische Welle erzeugt; und
einen zweiten Draht (22), der so konfiguriert ist, dass er den zweiten Bereich (WR2) definiert und die zweite elektromagnetische Welle erzeugt, und
der erste Draht (21) und der zweite Draht (22) nahe beieinander entlang des Begrenzungsabschnitts (BD) zwischen dem ersten Bereich (WR1) und dem zweiten Bereich (WR2) installiert sind.

5. System nach Anspruch 3, **dadurch gekennzeichnet, dass**
die Drähte (21, 22) aufeisen:
einen dritten Draht (23), der in einer Ringform angeordnet ist, um den ersten Bereich (WR1) und den zweiten Bereich (WR2) zu umschließen; und
einen vierten Flächendraht (24), der entlang des Grenzabschnitts (BD) zwischen dem ersten Bereich (WR1) und dem zweiten Bereich (WR2) angeordnet ist.

6. System nach einem der Ansprüche 3 bis 5, **dadurch gekennzeichnet, dass**
eine Station (3) die Drähte (21, 22, 23, 24) so erregt, dass die erste elektromagnetische Welle und die zweite elektromagnetische Welle abwechselnd erzeugt werden.

## Revendications

1. Système de travail (SY), comprenant une région de travail (WR), une machine de travail (1) à déplacement automatique qui effectue un travail dans la région de travail (WR), une station (3) configurée pour charger la machine de travail (1), dans lequel
la région de travail (WR)
comporte un chemin étroit (NR), s'étendant dans une direction prédéterminée, dont la largeur est plus étroite qu'une référence prédéterminée, et
est divisée en une première région (WR1) et une deuxième région (WR2), qui sont adjacentes l'une à l'autre, une partie limite (BD) entre la première région (WR1) et la deuxième région (WR2) s'étendant dans la direction prédéterminée de telle sorte que la première région (WR1) et la deuxième région (WR2) divise le chemin étroit (NR) étendu dans la direction prédéterminée,
la station (3) est installée dans une position quelconque de la partie limite (BD),
la machine de travail (1) comprend :
une unité de détection de signal (131) configurée pour détecter des signaux représentant la première région (WR1) et la deuxième région (WR2) ; et
une unité de commande de déplacement (141) configurée pour amener la machine de travail (1) à se déplacer de telle sorte qu'une valeur du signal détecté par l'unité de détection de signal (131) devient une valeur souhaitée, dans lequel
pendant le déplacement de la machine de travail (1) dans une région de la première région (WR1) et de la deuxième région (WR2), si un résultat de détection par l'unité de détection de signal (131) pour un signal représentant l'autre région satisfait une référence, l'unité de commande de déplacement (141) amène la machine de travail (1) à se déplacer sur la base du signal représentant l'autre région, **caractérisé en ce que**
pendant le déplacement de la machine de travail (1) dans la une région, l'unité de commande de déplacement (131) amène la machine de travail (1) à se déplacer le long d'une partie périphérique intérieure de la une région tout en détectant un signal représentant la une région par l'unité de détection de signal (131) de telle sorte qu'une valeur du signal représentant la une région maintient une première valeur (K1), et,
si le résultat de détection par l'unité de détection de signal (131) pour le signal représentant l'autre région satisfait la référence, l'unité de commande de déplacement (141) amène la machine de travail (1) à se déplacer le long d'une partie périphérique extérieure de l'autre région de telle sorte qu'une valeur du signal représentant l'autre région maintient une deuxième valeur (K2).

2. Système selon la revendication 1, **caractérisé en ce que** la machine de travail (1) comprend en outre :
une unité de détermination (14) configurée pour déterminer que la machine de travail (1) est située à proximité de la partie limite (BD) pendant le déplacement de la machine de travail (1) dans la une région de la première région (WR1) et de la deuxième région (WR2) si le résultat de détection par l'unité de détection de signal (131) pour le signal représentant l'autre région satisfait la référence.

3. Système selon la revendication 1 ou 2, **caractérisé en ce que** la première région (WR1) et la deuxième région (WR2) sont définies par des fils (21, 22) configurés pour générer une première onde électromagnétique et une deuxième onde électromagnétique, respectivement, et
une unité de détection de signal (131) détecte la première onde électromagnétique et la deuxième onde électromagnétique en tant que signaux représentant la première région (WR1) et la deuxième région (WR2).

4. Système selon la revendication 3, **caractérisé en ce que**
les fils (21, 22) comportent :
un premier fil (21) configuré pour définir la première région (WR1) et générer la première onde électromagnétique ; et
un deuxième fil (22) configuré pour définir la deuxième région (WR2) et générer la deuxième onde électromagnétique, et
le premier fil (21) et le deuxième fil (22) sont installés à proximité l'un de l'autre le long de la partie limite (BD) entre la première région (WR1) et la deuxième région (WR2).

5. Système selon la revendication 3, **caractérisé en ce que**
les fils (21, 22) comportent :
un troisième fil (23) agencé en une forme d'anneau pour envelopper la première région (WR1) et la deuxième région (WR2) ; et
un quatrième fil de zone (24) agencé le long de la partie limite (BD) entre la première région (WR1) et la deuxième région (WR2).

6. Système selon l'une quelconque des revendications 3 à 5, **caractérisé en ce que**
une station (3) excite les fils (21, 22, 23, 24) de telle sorte que la première onde électromagnétique et la deuxième onde électromagnétique sont générées alternativement.
